# EUROPEAN PATENT APPLICATION

(11) **EP 2 056 222 A1**
(43) Date of publication of application: **06.05.2009**
(21) Application number: 08003017.4
(22) Date of filing: 19.02.2008
(51) Int. Cl.: G06F 17/30

(54) **Method for performing an operation on an XML database**

(30) Priority: 22.10.2007 IN ko14362007
(71) Applicant: Software AG, 64297 Darmstadt (DE)
(72) Inventor: Shinde, Vikram, Pimple Gurav Pune-411027, Maharashtra (IN); Bendale, Rupesh, Pune-411014, Maharashtra (IN)
(74) Representative: Heselberger, Johannes

(57) **Abstract**

The present invention relates to a method of performing an operation on an XML database (100) comprising the steps of exchanging at least one DataObject (2) between a client application (1) and a Service DataObject (SDO) handler (10) and transforming the DataObject (2) into an XQuery operation for accessing XML documents of the XML database (1) and transforming an XML document obtained in response from the XML database (1) to the XQuery into a DataObject (2). If the client application is Java based, the SDO handler (10) provides an interface between DataObjects (2) defined in Java and XML documents retrieved by using XQuery expressions. Preferably, the SDO handler (10) is part of a XQuery API for Java.

## Description

### 1. Technical field

The present invention relates to a method of performing an operation on an XML database and to a computer program and a database adapted to perform such a method.

### 2. The prior art

XML databases are among the most important technical tools of modem information societies. The high degree of flexibility of such a database allows to store and to retrieve data in a highly efficient manner. XML databases are typically accessed using the query language XQuery. XQuery provides the means to extract and manipulate data from XML documents or any data source that can be viewed as XML, such as relational databases.

For many applications, tools and/or frameworks, it is desirable to access an XML database using standard programming languages such as Java or C++. To this end, binding technologies have been developed such as Java Architecture for XML Binding (JAXB), which allows Java developers to map Java classes to XML representations, thereby providing static interfaces between Java and XML, i.e. interfaces, which are defined a development time.

However, using the known binding technologies for the access of an XML database is difficult and time consuming for a developer. Further, there are some applications, tools or frameworks, which require a dynamic access to the XML database, which cannot be provided by the static interfaces of the prior art.

Finally, the XML documents retrieved from the XML database using known APIs can typically not be independently managed, if the connection to the data source, namely the XML database, is lost.

The present invention is therefore in one aspect based on the technical problem to overcome at least some of the disadvantages of the prior art and to provide a better access to XML databases for applications, tools or frameworks using standard programming languages such as Java, C++.

### 3. Summary of the invention

In one aspect of the present invention, this problem is solved by a method according to claim 1. In one embodiment, a method is provided of performing an operation on an XML database comprising the steps of:
- exchanging at least one DataObject between a client application and a Service DataObject (SDO) handler; and
- transforming the DataObject into an XQuery operation for accessing XML documents of the XML database and transforming an XML document obtained in response from the XML database to the XQuery into a DataObject.

If the client application is Java based, the SDO handler provides an interface between DataObjects defined in Java and XML documents retrieved by executing XQuery expressions. Preferably, the SDO handler is part of an XQuery API for Java.

Using the SDO handler of the inventions, client applications do not need to care about XML parsing, instead they can deal with simple Java interfaces having setter, getter methods. SDOs are standardized according to the Java Specification Request 235 and provide a uniform data access layer for heterogeneous data sources. Involving SDOs in the exchange of data between an application and an XML database can provide both, a static and a dynamic way to manage the data retrieved from the database. In cases, where metadata are known at development time of the application, the use of SDO supports in a particularly easy manner code-generating interfaces for DataObjects. The interface may for example be provided based on a schema definition of the XML documents stored in the XML database, wherein the schema definition is provided by a registry.

Alternatively or in addition to the static interface, the SDO handler may provide a dynamic interface, which defines at runtime the type of DataObjects handled by the SDO handler. As a result, schemata can be generated to documents which do not have a compatible schema.

In one embodiment, the operation is at least one of the group comprising Create, Read, Update and Delete operations on the XML data in the XML database. The DataObject exchanged between the client application and the SDO handler may comprise a collection of tree-structured data, in particular a data graph. The SDO's Change Summary feature enables access to change history information for a data graph. Further, an XPath based navigation through data graph is made possible.

According to another aspect, the present invention relates to Database management system (DBMS) for an XML database adapted to perform any of the above described methods. Finally, a computer program is provided comprising instructions adapted to perform any of the described methods.

### 4. Short description of the drawings

- Fig. 1:: A schematic representation of an embodiment of the present invention for performing an operation on a XML database;
- Fig. 2:: A schematic representation of a preliminary step of generating a Java interface with a SDO generator;
- Fig. 3:: An exemplary implementation of a static interface provided by a SDO handler; and
- Fig. 4:: An exemplary implementation of a dynamic interface provided by a SDO handler.

### 5. Detailed description of preferred embodiments

In the following, exemplary embodiments of the method of the present invention are described. It will be understood that the functionality described below can be implemented in a number of alternative ways, for example for managing a single XML database server or a distributed arrangement of one or more XML databases. Further, while reference is made in the following to Java, the present invention can also be used with a variety of other programming languages such as C++ and others.

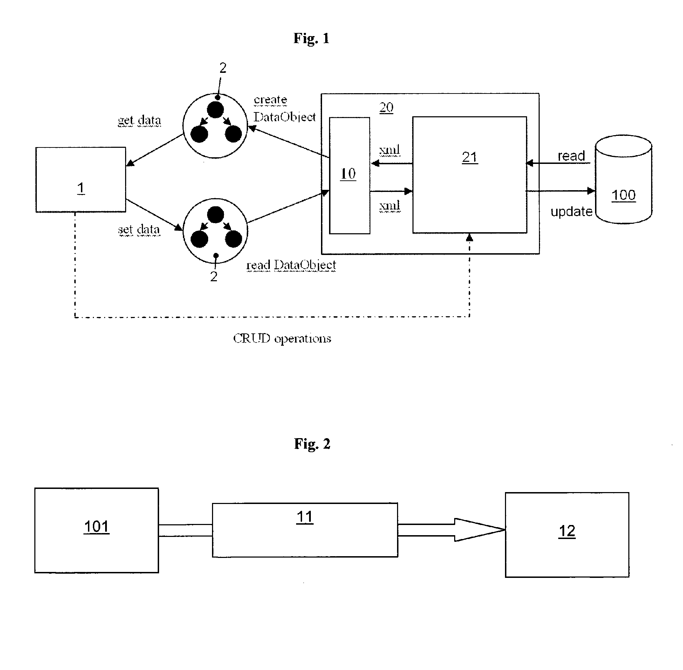

Fig. 1 presents a schematic view of the flow of operation between a client application 1 and an XML database 100. One example of the XML database 100 is available under the name "Tamino" from applicant. The connection between the client application 1 and the XML database 100 may be persistent or only temporarily, for example, if the XML database 100 is part of a service oriented architecture (SOA). Information about requests serviced by the XML database 100 may be provided in a registry (not shown in the figures), which may in particular contain metadata concerning the content of the XML database such as schema information. One example of such a registry is available from applicant under the name "Centrasite".

The schematic representation in Fig. 1 illustrates two operations, namely a "get data" operation, wherein the client application 1 requests data from the XML database 100, and a "set data" operation, wherein the client application transmits data to the XML database 100, possibly a modified version of the data just received. Generally, there may be a variety of operations performed on the XML data base, wherein the most relevant ones are so-called CRUD operation causing the creation, the reading, the update and/or the deletion of data in the XML data base 100.

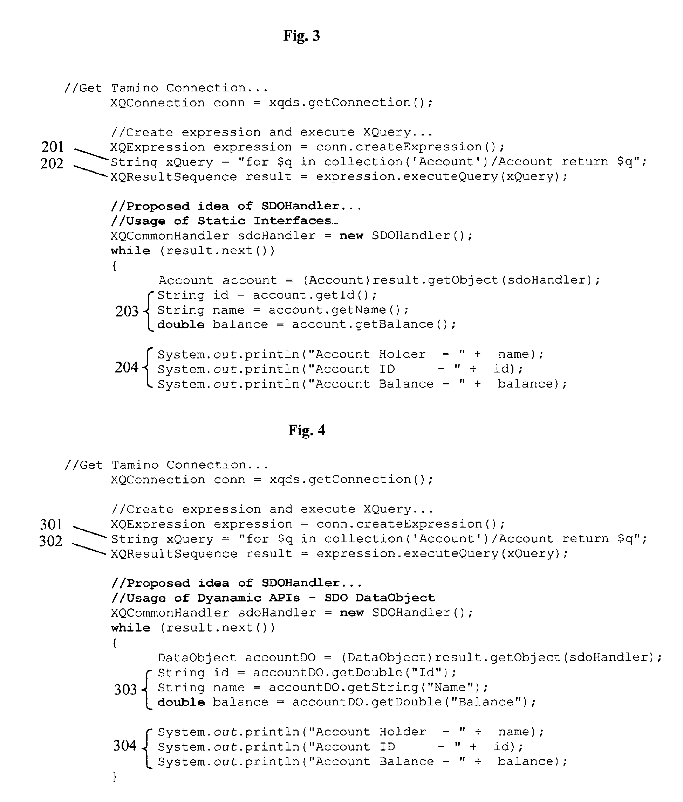

As can be seen from Fig. 1, the client application 1 exchanges DataObjects 2 with a SDO handler 10, examples of which are described further below with reference to Figs. 3 and 4. The term Service Data Object (SDO) refers to a data programming architecture and an API. It simplifies data programming by unifying data programming across data source types, provides support for common application patterns and enables applications, tools and frameworks to more easily perform operations such as query, view and bind.

The DataObjects 2 are either static or dynamic, i.e. their types are either predefined at development time or dynamically determined during runtime. One example of the exchanged DataObjects 2 is a data graph 2, as schematically shown in Fig. 1. A data graph 2 is a collection of tree-structured or graph-structured data. Having received the data graph 2, the client application 1 may change or mutate the data graph 2 and then apply changes thereof back to the data source, i.e. the XML database 100. Most commonly, the update is performed with optimistic concurrency semantics, which means that if any of the underlying data was changed before the client application 1 applies the changes, the update is rejected and the client application 1 must take corrective action.

In the embodiment of Fig. 1, the client application 1 uses an XQuery API 20 for Java (XQJ) in accordance with the Java Specification Request 225 as a data mediator service 21 to access documents in the XML database 100. XML documents which are retrieved from the XML database are loaded by the SDO handler 10 as dynamic SDO DataObject instance or an instance of a class implementing one or more static Java interfaces. In other words, the SDO handler 10 converts XML data into Java objects and vice versa. As a result, the XML documents can outlive as Java Objects even if the connection to the data source, i.e. the XML database 100 is lost.

The Java interfaces are generated as schematically shown in Fig. 2. An SDO Interface generator 11 uses metadata on the documents in the XML database 100 as input, such as a schema definition 101, and generates one or more static Java interfaces 12, which can then be used by the client application 1 (or any other application, not shown in Fig. 1). Therefore the URL or file path of the required metadata inside the database, e.g. a schema definition, needs to be specified to the SDO interface generator 11. The generated code is stored at the provided directory path.

An example of the call of the SDO interface generator could be in agreement with the following definitions:
C:\>set CLASSPATH=%CLASSPATH%;c:\sdo\lib\sdo.jar
C:\>java com.softwareag.sdo.codegen.XSD2JavaGenerator -?
Usage : XSD2JavaGenerator <options>
where the possible options include :

| | |
|---|---|
| -d OR -dir | : Specify where to put generated code. |
| -c OR -clrdir | : Clean the directory before generation |
| -v OR -verbose | : Enable verbose. |
| -config | : Provide all configurations as XML file. |
| -s OR -schema | : Specify schema file path or URL |
| -I OR -logdir | : Specify the log directory location. |
| -? OR -help | : Provides Usage help. |

A practical example of the related call is shown below:
C:\>java com.softwareag.sdo.codegen.XSD2JavaGenerator -s C:\schemas\ipo.xsd -d
C:\generatedSources

Fig. 3 presents an example of a static interface of the SDO handler 10 and its use. It illustrates how documents retrieved from the XML database 100 can be handled by the SDO handler 10. As can be seen, an exemplary XQuery expression "for $q in collection ('Account')/ Account return $q" is assigned in step 201 to a variable of type string. Further, the result of the XQuery is assigned to a parameter XQResultSequence result (step 202). The use of this interface is shown in the following section of code of the example of Fig. 3, wherein data from the retrieved XML document "Account" are parsed and assigned to various variables (steps 203), which are then displayed in steps 204.

Fig. 4, finally, presents an example how documents of the XML database can be handled by a dynamic application programming interface of the SDO handler, if the complete structure of the response from the XML database is not known at development time. Whereas the steps 301 and 302 are identical to the steps 201 and 203, the result of the XQuery is in this case assigned to a dynamic DataObject. In order to extract the information contained within the DataObject it can be parsed in steps 303 using the known methods defined in the SDO DataObject interface. Then the data contained in the retrieved XML document is assigned to variables. However, due to the dynamic nature of this API of the SDO handler, it is not necessary to predefine the structure of the DataObject into which the retrieved XML document is converted during runtime. Usually it can be assumed that a user of a dynamic interface knows the content respectively the structure of the requested XML document.

Whereas the examples of Figs. 3 and 4 are directed to the retrieval of XML documents, the described method and the SDO handler can in a very similar manner also be used for the opposite process, namely to convert a DataObject provided by the client application 1 into a XML document, which is then stored in the XML Database 100.

The described method can be implemented as an add-on software to either a standard client application and/or a database management system, which is used to manage the XML database. The high degree of flexibility achieved by transforming the XML documents in service data objects is particularly useful if the XML database system is part of a service oriented architecture (SOA).

## Claims

1. A method of performing an operation on an XML database (100) comprising the steps of:
a. exchanging at least one DataObject (2) between a client application (1) and a Service Data Object (SDO) handler (10); and
b. transforming the DataObject (2) into an XQuery operation for accessing XML documents of the XML database (1) and transforming an XML document obtained in response from the XML database (1) to the XQuery into a DataObject (2).

2. The method of claim 1, wherein the client application (1) is Java based and wherein the SDO handler (10) provides an interface between DataObjects (2) defined in Java and XQuery expressions.

3. The method of claim 2, wherein the interface provided by the SDO handler (2) is a static interface which defines at development time the type of DataObject (2) handled by the SDO handler (10).

4. The method of claim 2 or 3, wherein the interface is provided based on a schema definition (101) of the XML documents stored in the XML database (100).

5. The method of claim 4, wherein the schema definition (101) of the XML documents stored in the XML database (100) is provided by a registry.

6. The method of any of the claims 2 to 5, wherein the SDO handler (10) provides a dynamic interface, which defines at runtime the type of DataObject (2) handled by the SDO handler (10).

7. The method of any of the preceding claims, wherein the operation on the XML database (100) is at least one of the group comprising Create, Read, Update and Delete operations on the XML data in the XML database (100).

8. The method of any of the preceding claims, wherein the DataObject (2) exchanged between the client application (1) and the SDO handler (10) comprises a collection of tree-structured data.

9. The method according to any of the preceding claims, wherein the SDO handler (10) is part of a XQuery API (20) for Java.

10. Computer program comprising instructions for performing a method of any of the preceding method claims 1 - 9.

11. Database management system for an XML database (100) adapted to perform a method of any of the preceding method claims 1 - 9.
